# EUROPEAN PATENT APPLICATION

(11) **EP 4 538 325 A1**
(43) Date of publication of application: **16.04.2025**
(21) Application number: 23849428.0
(22) Date of filing: 01.08.2023
(51) Int. Cl.: C08L 23/12, C08L 23/10, C08L 23/14, C08L 23/08, C08L 23/06, C08L 23/04, C08J 3/22, C08K 3/014, C09K 15/00

(54) **AUXILIARY MASTERBATCH AND USE THEREOF**

(30) Priority: 05.08.2022 CN 202210940265
(71) Applicant: Rianlon Corporation, Tianjin 300480 (CN)
(72) Inventor: WANG, Jinlong, Tianjin 300480 (CN); ZHANG, Enyu, Tianjin 300480 (CN); WEI, Xin, Tianjin 300480 (CN); YANG, Jinxing, Tianjin 300480 (CN); AN, Ping, Tianjin 300480 (CN); LUO, Hai, Tianjin 300480 (CN)
(74) Representative: Zacco GmbH
(86) International application number: PCT/CN2023/110615
(87) International publication number: WO 2024/027722

(57) **Abstract**

Provided are an additive masterbatch and use thereof. Raw materials of the additive masterbatch include a resin substrate, a high-melting-point additive, and a low-melting-point additive, wherein a melting point of the high-melting-point additive is greater than 40°C, and a melting point of the low-melting-point additive is equal to or less than 40°C. The additive masterbatch effectively solves the problems of a low-melting-point additive masterbatch being prone to adhesion and clumping, being complex in preparation process, being difficult to mold, etc. The provided additive masterbatch is not prone to clumping, can be prepared simply by utilizing a common process for masterbatch preparation, is simple to mold, and can be prepared into masterbatches with different particle sizes.

## Description

The present application is based upon and claims priority to Chinese Application No. 202210940265.4, filed August 05, 2022, the public contents of which are incorporated herein again as a whole by reference.

### Technical Field

The present application relates to the technical field of polymer materials, and specifically relates to an additive masterbatch and use thereof.

### Background

When exposed to the sunlight for a long time, polymer materials undergo aging and degradation due to the absorption of ultraviolet energy, resulting in aging phenomena, such as discoloration, cracking, decreased mechanical properties and decreased electrical properties, of the materials, such that the materials cannot be used continuously. Such process is called photoaging.

The photoaging reaction can be effectively slowed down by adding light stabilizers during production of the polymer materials.

At present, the light stabilizers mainly include the varieties of ultraviolet absorbers and hindered amine light stabilizers. The ultraviolet absorbers include benzophenones, benzotriazoles, triazines, etc. The ultraviolet absorbers play roles of light stabilizers by absorbing harmful ultraviolet light and converting the same into heat for release. The hindered amine light stabilizers play roles of light stabilizers by first forming active free radicals themselves and further capturing free radicals generated by aging and degradation of materials through the active free radicals. The hindered amine light stabilizers are an important progress in photostabilization of polymers, and have been widely used in the fields of general-purpose plastics, engineering plastics, coatings, adhesives, rubber, etc.

Although the hindered amine light stabilizers have excellent application effects, some of the hindered amine light stabilizers are low in melting point and difficult to feed during use. A solution includes preparing such low-melting-point hindered amine light stabilizers into additive masterbatches, thereby facilitating mixing and processing with the polymer materials. However, due to low-melting-point additive components, the additive masterbatches prepared above have the problem of clumping in storage, transportation and subsequent use, which affect normal use by downstream customers. Taking 2,2,6,6-tetramethyl-4-piperidinyl stearate (UV-3853) as an example, the product has a melting point of only about 28°C, and is white to light yellow waxy or oily at room temperature. As described above, the product is usually prepared into a masterbatch for use by customers, and the prepared masterbatch has the problem of clumping during storage, transportation and subsequent use.

In view of the technical problems of the above low-melting-point additive masterbatches, taking UV-3853 as an example, the anti-aging additive industry mainly has the following several mainstream solutions at present. (1) Some other processing auxiliaries, such as a foaming agent and an adsorbent, are used to improve the coating performance of a PP carrier for the light stabilizer UV-3853, thereby achieving the purpose of inhibiting precipitation of the light stabilizer UV-3853. However, since the adsorbent and the foaming agent are introduced in a certain proportion in the method, some adverse impacts may be caused during processing of the polymer materials, such as the problem of compatibility, etc. (2) Foamed polypropylene is used as a carrier. 3853 liquid is absorbed through the foamed polypropylene, thereby achieving the purpose of improving precipitation of the light stabilizer 3853. The method has a high production cost, low production efficiency and high requirements for a processing technology, thus having no cost advantages. (3) A protective layer is added on a surface. For example, Patent CN108137863A discloses 3853PP5 prepared by a co-extrusion technology utilizing a multi-stage extruder. An encapsulation effect is achieved by extruding a layer of a protecting cover on the surface. However, because a cutting surface of a cutter cannot be protected, the phenomena of precipitation and clumping still occur in practical applications.

In addition to UV-3853, other low-melting-point additive masterbatches also have the above problems of being difficult to prepare and having large masterbatch adhesion.

In view of the above, the present application is proposed hereby.

### SUMMARY

The main purpose of the present application is to provide an additive masterbatch and use thereof, in order to solve the problems of a low-melting-point additive masterbatch being prone to clumping, being complex in process, etc., in the prior art.

In order to achieve the above purpose, according to one aspect of the present application, an additive masterbatch is provided. Raw materials of the additive masterbatch include a resin substrate, a high-melting-point additive, and a low-melting-point additive, wherein a melting point of the high-melting-point additive is greater than 40°C, and a melting point of the low-melting-point additive is equal to or less than 40°C.

Further, the low-melting-point additive is a liquid or paste at room temperature, or a solid with the melting point of equal to or less than 40°C; and preferably, the melting point of the high-melting-point additive is greater than 80°C, more preferably greater than 100°C, further preferably greater than 150°C, and further preferably greater than 200°C.

Further, the low-melting-point additive is a weather-resistance additive with the melting point of equal to or less than 40°C, preferably a light stabilizer with the melting point of equal to or less than 40°C; and preferably, the light stabilizer includes a hindered amine light stabilizer and/or an ultraviolet absorber, more preferably a hindered amine light stabilizer or a composition thereof.

Further, the hindered amine light stabilizer or a composition thereof is selected from one or more of a reaction product of bis(2,2,6,6-tetramethyl-4-piperidyl) sebacate with tert-butyl hydroperoxide and octane, 2,2,6,6-tetramethyl-4-piperidinyl stearate, a mixture of bis(1,2,2,6,6-pentamethyl-4-piperidyl) sebacate and mono(1,2,2,6,6-pentamethyl-4-piperidyl) sebacate, bis(2,2,6,6-tetramethyl-1-undecanoxy-4-yl)-carbonate, and a mixture of 2,2,6,6-tetramethyl-4-piperidinyl stearate and hexadecyl 3,5-bis-tert-butyl-4-hydroxybenzoate.

Further, the ultraviolet absorber is selected from one or more of benzotriazole ultraviolet absorbers, cyanoacrylate ultraviolet absorbers, benzamidine ultraviolet absorbers, benzophenone ultraviolet absorbers, hydroxyphenyltriazine ultraviolet absorbers, oxanilide ultraviolet absorbers, or salicylate ultraviolet absorbers; and more preferably, the ultraviolet absorbent is selected from one or more of a reaction product of methyl 3-(3-(2H-benzotriazol-2-yl)-5-tert-butyl-4-hydroxyphenyl)propionate and PEG 300, hexadecyl 3,5-di-tert-butyl-4-hydroxybenzoate, 2'-ethylhexyl 2-cyano-3,3-diphenylacrylate, and N-(ethoxycarbonylphenyl)-N'-methyl-N'-phenylformamidine.

Further, the high-melting-point additive includes an organic compound and/or an inorganic compound, and the high-melting-point additive is preferably a polymer material additive; more preferably, the high-melting-point additive is a polymer material organic additive with a relative molecular mass of greater than 500, further preferably a polymer material organic additive with a relative molecular mass of greater than 600; further preferably, the high-melting-point additive is selected from one or more of tri[2,4-di-tert-butylphenyl]phosphite, 1,3,5-tri(3,5-di-tert-butyl-4-hydroxybenzyl)-1,3,5-triazin-2,4,6(1H,3H,5H)-trione, 1,3,5-trimethyl-2,4,6-tri(3,5-di-tert-butyl-4-hydroxybenzyl)benzene, and polyethylene wax; preferably, the resin substrate is thermoplastic resin; more preferably, the thermoplastic resin is selected from one or more of polyolefin, polyester, polyether, polyketone, polyamide, polyurethane, polystyrene, high-impact-resistant styrene, polyacrylate, polymethacrylate, polyacetal, polyacrylonitrile, polybutadiene, acrylonitrile-butadiene-phenyltriene trimers, styrene-acrylonitrile copolymers, acrylate-styrene-acrylonitrile trimers, cellulose acetate butyrate, cellulose polymers, polyimide, polyamideimide, polyetherimide, polyphenylene sulfide, polyphenyl ether, polysulfone, polyether sulfone, polyvinyl chloride, polycarbonate, polyformaldehyde, and ethylene-vinyl acetate polymers; more preferably, the resin substrate is polyolefin; and further preferably, the polyolefin is selected from polypropylene and/or polyethylene.

Further, according to parts by weight, the raw materials of the polymer material additive masterbatch include 30-70 parts of the resin substrate, 0.1-30 parts of the high-melting-point additive, and 30-70 parts of the low-melting-point additive; more preferably, according to parts by weight, the raw materials of the polymer material additive masterbatch include 30-70 parts of the resin substrate, 1-25 parts of the high-melting-point additive, and 30-70 parts of the low-melting-point additive; further preferably, according to parts by weight, the raw materials of the polymer material additive masterbatch include 40-60 parts of the resin substrate, 1-20 parts of the high-melting-point additive, and 40-60 parts of the low-melting-point additive; and further preferably, a weight ratio of the high-melting-point additive to the low-melting-point additive is 1:3-15, most preferably 1:5-15.

Further, the low-melting-point additive includes one or more of 2,2,6,6-tetramethyl-4-piperidinyl stearate, and a mixture of 2,2,6,6-tetramethyl-4-piperidinyl stearate and hexadecyl 3,5-bis-tert-butyl-4-hydroxybenzoate; the resin substrate includes polyethylene or polypropylene; and the high-melting-point additive includes one or more of tri[2,4-di-tert-butylphenyl]phosphite, 1,3,5-tri(3,5-di-tert-butyl-4-hydroxybenzyl)-1,3,5-triazin-2,4,6(1H,3H,5H)-trione, 1,3,5-trimethyl-2,4,6-tri(3,5-di-tert-butyl-4-hydroxybenzyl)benzene, and polyethylene wax.

Preferably, the additive masterbatch includes: 1-20 parts of tri[2,4-di-tert-butylphenyl]phosphite, 30-50 parts of 2,2,6,6-tetramethyl-4-piperidinyl stearate, and 30-50 parts of polypropylene resin; or 1-20 parts of 1,3,5-tri(3,5-di-tert-butyl-4-hydroxybenzyl)-1,3,5-triazin-2,4,6(1H,3H,5H)-trione, 30-50 parts of 2,2,6,6-tetramethyl-4-piperidinyl stearate, and 30-50 parts of polypropylene resin; or 1-20 parts of 1,3,5-trimethyl-2,4,6-tri(3,5-di-tert-butyl-4-hydroxybenzyl)benzene, 30-50 parts of 2,2,6,6-tetramethyl-4-piperidinyl stearate, and 30-50 parts of polypropylene resin; or 0.1-10 parts of tri[2,4-di-tert-butylphenyl]phosphite, 0.1-10 parts of 1,3,5-trimethyl-2,4,6-tri(3,5-di-tert-butyl-4-hydroxybenzyl)benzene, 30-50 parts of 2,2,6,6-tetramethyl-4-piperidinyl stearate, and 30-50 parts of polypropylene resin; or 0.1-10 parts of tri[2,4-di-tert-butylphenyl]phosphite, 0.1-10 parts of 1,3,5-tri(3,5-di-tert-butyl-4-hydroxybenzyl)-1,3,5-triazin-2,4,6(1H,3H,5H)-trione, 30-50 parts of 2,2,6,6-tetramethyl-4-piperidinyl stearate, and 30-50 parts of polypropylene resin; or 0.1-10 parts of polyethylene wax, 0.1-10 parts of 1,3,5-tri(3,5-di-tert-butyl-4-hydroxybenzyl)-1,3,5-triazin-2,4,6(1H,3H,5H)-trione and/or tri[2,4-di-tert-butylphenyl]phosphite and/or 1,3,5-trimethyl-2,4,6-tri(3,5-di-tert-butyl-4-hydroxybenzyl)benzene, 30-50 parts of 2,2,6,6-tetramethyl-4-piperidinyl stearate, and 30-50 parts of polypropylene resin.

Further, the polymer material additive masterbatch is formed by sequentially subjecting the raw materials to screw extrusion, granulation, drying, and cooling, and the granulation is preferably performed by underwater pelletizing at an operating temperature of 190-230°C.

Further, a particle size of the polymer material additive masterbatch is 1-5 mm.

According to another aspect of the present application, use of the additive masterbatch in a polymer material is also provided.

The present application effectively solves the problems of a low-melting-point additive masterbatch being prone to adhesion and clumping, being complex in preparation process, etc. The additive masterbatch prepared in the present application is not prone to clumping, can be achieved simply by utilizing a common facility or process for masterbatch preparation, is simple in operation, and can be prepared into additive masterbatch products with different particle sizes.

### Brief Description of the Drawings

Drawings attached to the specification that form a part of the present application are used to provide further understanding of the present application, and schematic embodiments of the present application and description thereof are used to interpret the present application and are not intended to constitute improper limitations to the present application. In the drawings:
Fig. 1 shows a product photo of a large-particle additive masterbatch prepared in one embodiment of the present application;
Fig. 2 shows a product photo of a small-particle additive masterbatch prepared in one embodiment of the present application;
Fig. 3 shows photos of an additive masterbatch prepared in Example 1 of the present application, wherein (a) shows the photo before a test, and (b) shows the photo after the test;
Fig. 4 shows photos of an additive masterbatch prepared in Example 2 of the present application, wherein (a) shows the photo before a test, and (b) shows the photo after the test;
Fig. 5 shows photos of an additive masterbatch prepared in Example 3 of the present application, wherein (a) shows the photo before a test, and (b) shows the photo after the test;
Fig. 6 shows photos of an additive masterbatch prepared in Example 4 of the present application, wherein (a) shows the photo before a test, and (b) shows the photo after the test;
Fig. 7 shows photos of an additive masterbatch prepared in Example 5 of the present application, wherein (a) shows the photo before a test, and (b) shows the photo after the test;
Fig. 8 shows photos of an additive masterbatch prepared in Example 6 of the present application, wherein (a) shows the photo before a test, and (b) shows the photo after the test;
Fig. 9 shows photos of an additive masterbatch prepared in Example 7 of the present application, wherein (a) shows the photo before a test, and (b) shows the photo after the test;
Fig. 10 shows photos of an additive masterbatch prepared in Example 8 of the present application, wherein (a) shows the photo before a test, and (b) shows the photo after the test;
Fig. 11 shows photos of an additive masterbatch prepared in Example 9 of the present application, wherein (a) shows the photo before a test, and (b) shows the photo after the test;
Fig. 12 shows photos of an additive masterbatch prepared in Example 10 of the present application, wherein (a) shows the photo before a test, and (b) shows the photo after the test;
Fig. 13 shows photos of an additive masterbatch prepared in Example 11 of the present application, wherein (a) shows the photo before a test, and (b) shows the photo after the test;
Fig. 14 shows photos of an additive masterbatch prepared in Example 12 of the present application, wherein (a) shows the photo before a test, and (b) shows the photo after the test;
Fig. 15 shows photos of an additive masterbatch prepared in Example 13 of the present application, wherein (a) shows the photo before a test, and (b) shows the photo after the test;
Fig. 16 shows a photo of an additive masterbatch in Comparative Example 1 after a test;
Fig. 17 shows a photo of an additive masterbatch in Comparative Example 2 after a test;
Fig. 18 shows photos of an additive masterbatch in Comparative Example 3, wherein (a) shows a product at the beginning of production, (b) shows a product after production for 5 minutes, and (c) shows an untested product.

### Detailed Description of the Embodiments

It should be noted that embodiments in the present application and features in the embodiments can be combined with each other without conflict. The present application is described in detail below with reference to the drawings and in conjunction with the embodiments.

As recorded in the background, a low-melting-point additive masterbatch is prone to adhesion and clumping. Solutions in the prior art include introducing a component capable of adsorbing a low-melting-point additive to reduce precipitation of the additive so as to reduce the cover on a surface of the masterbatch to achieve the effect of resisting adhesion and clumping. The existing solutions either introduce an unconventional adsorbent, or are complex in preparation process and difficult to achieve. Under such background, the present application provides a simpler and more effective solution, which completely solves the problems of an additive masterbatch being prone to adhesion and clumping, and an additive masterbatch provided has a simple preparation process.

In a typical embodiment of the present application, an additive masterbatch is provided. Raw materials of the additive masterbatch include a resin substrate, a high-melting-point additive, and a low-melting-point additive, wherein a melting point of the high-melting-point additive is greater than 40°C, and a melting point of the low-melting-point additive is equal to or less than 40°C.

The low-melting-point additive is prone to precipitation in the resin substrate of the masterbatch, which is not only related to the low melting point, but also related to the poor compatibility between the two. The resin substrate is difficult to be fully encapsulated on the surface of the low-melting-point additive. When the temperature is raised, the problem of precipitation appears due to the increase of melting or fluidity of the low-melting-point additive, and the problem of precipitation is more obvious especially at a position close to a surface layer of the masterbatch. However, the raw materials of the additive masterbatch provided in the present application not only include the resin substrate and the low-melting-point additive, but also introduce the high-melting-point additive with the melting point of greater than 40°C. During preparation of the masterbatch, the raw materials usually undergo the steps of screw extrusion, granulation, drying, cooling, etc. The high-melting-point additive introduced in the present application can be first uniformly melted and dispersed in the resin substrate together with the low-melting-point additive at the stages of screw extrusion and granulation of the masterbatch. Then, due to decrease of the processing temperature, the high-melting-point additive is first solidified and encapsulated on the surface of the low-melting-point additive to form a layer of a protective barrier, thereby effectively inhibiting the problems of adhesion and clumping of the additive masterbatch during subsequent transportation and use.

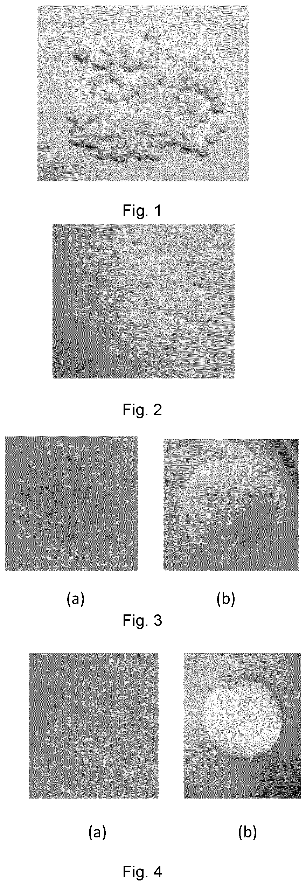

In addition, the additive masterbatch provided in the present application can be prepared by utilizing a conventional granulation process. Moreover, it should be noted that the inventor of the present application has found through research that granulation of the masterbatch also has certain requirements for the particle size, and the masterbatch generally needs to be prepared into large particles or small particles to meet different addition requirements of downstream materials. The particle size of a small-particle masterbatch is usually (2±1)×(2±1) mm, and the particle size of a large-particle masterbatch is usually (4±1)×(4±1) mm. Because a material melt has large strength during granulation of the raw materials of the present application, large melt pressure can be formed, ensuring that the raw materials can smoothly pass through a small-hole die head to form masterbatch particles with a small particle size. Moreover, the masterbatch is round and full in shape and good in fluidity. Therefore, the polymer material additive masterbatch of the present application has an adjustable and relatively wide particle size range and good molding performance. The formed large-particle masterbatch and the small-particle masterbatch are as shown in Fig. 1 and Fig. 2, respectively.

When the melting points of the high-melting-point additive and the low-melting-point additive have a greater difference, more convenience is provided for the high-melting-point additive to form a protective film on the surface of the low-melting-point additive, and a better promoting effect of preventing adhesion and clumping of the masterbatch is achieved. In one preferred embodiment, the low-melting-point additive of the present application is a liquid or paste at room temperature, or a solid with the melting point of equal to or less than 40°C. The melting point of the high-melting-point additive is greater than 80°C, more preferably greater than 100°C, further preferably greater than 150°C, and further preferably greater than 200°C.

Preferably, the low-melting-point additive is a weather-resistance additive with the melting point of equal to or less than 40°C, preferably a light stabilizer with the melting point of equal to or less than 40°C. The present application is more suitable for the low-melting-point additive, and has a more prominent effect on reducing the problems of masterbatch clumping, etc. Preferably, the light stabilizer includes a hindered amine light stabilizer and/or an ultraviolet absorber, more preferably a hindered amine light stabilizer or a composition thereof.

Exemplarily, the hindered amine light stabilizer includes, but is not limited to, one or more of a reaction product (UV-123) of bis(2,2,6,6-tetramethyl-4-piperidyl) sebacate with tert-butyl hydroperoxide and octane, 2,2,6,6-tetramethyl-4-piperidinyl stearate (UV-3853), a mixture (UV-292) of bis(1,2,2,6,6-pentamethyl-4-piperidyl) sebacate and mono(1,2,2,6,6-pentamethyl-4-piperidyl) sebacate, and bis(2,2,6,6-tetramethyl-1-undecanoxy-4-yl)-carbonate; the ultraviolet absorber includes, but is not limited to, one or more of benzotriazole ultraviolet absorbers, cyanoacrylate ultraviolet absorbers, benzamidine ultraviolet absorbers, benzophenone ultraviolet absorbers, hydroxyphenyltriazine ultraviolet absorbers, oxanilide ultraviolet absorbers, or salicylate ultraviolet absorbers; and more preferably, the ultraviolet absorbent is selected from one or more of a reaction product of methyl 3-(3-(2H-benzotriazol-2-yl)-5-tert-butyl-4-hydroxyphenyl)propionate and PEG 300 (UV-1130), hexadecyl 3,5-di-tert-butyl-4-hydroxybenzoate (UV-2908), 2'-ethylhexyl 2-cyano-3,3-diphenylacrylate (UV-3039), and N-(ethoxycarbonylphenyl)-N'-methyl-N'-phenylformamidine (UV-1). The composition of the hindered amine light stabilizer and the ultraviolet absorber is a mixture (UV-3808) of 2,2,6,6-tetramethyl-4-piperidinyl stearate (UV-3853) and hexadecyl 3,5-bis-tert-butyl-4-hydroxybenzoate (UV-2908).

In one preferred embodiment, the high-melting-point additive includes an organic compound and/or an inorganic compound, and the high-melting-point additive is preferably a polymer material additive. The polymer material additive can have better dispersibility and compatibility in the resin substrate, and can form better coating of the low-melting-point additive based on a lower use amount, such that the masterbatch has a better anti-clumping ability. More preferably, the high-melting-point additive is a polymer material organic additive with a relative molecular mass of greater than 500. The polymer material organic additive selected can be precipitated on the surface of the masterbatch together with the melted low-melting-point additive in a granulation process during preparation of the masterbatch. It is worth noting that even by means of such precipitation performance of the high-melting-point additive in the present application, the high-melting-point additive is fully precipitated in a granulation process during preparation of the masterbatch, such that the high-melting-point additive is more fully solidified and coated on the periphery of the low-melting-point additive precipitated around, thereby better inhibiting clumping after molding of the masterbatch. The use of the high-melting-point additive with a relative molecular mass of greater than 500 has a better promoting effect of preventing adhesion and clumping of a final masterbatch product. More preferably, the high-melting-point additive is a polymer material organic additive with a relative molecular mass of greater than 600.

In one preferred embodiment, the high-melting-point additive is selected from one or more of tri[2,4-di-tert-butylphenyl]phosphite (antioxidant 168, melting point 183-187°C), 1,3,5-tri(3,5-di-tert-butyl-4-hydroxybenzyl)-1,3,5-triazin-2,4,6(1H,3H,5H)-trione (antioxidant 3114, melting point 218-223°C), 1,3,5-trimethyl-2,4,6-tri(3,5-di-tert-butyl-4-hydroxybenzyl)benzene (antioxidant 330, melting point 240-245°C), and polyethylene wax (melting point 90-120°C). In addition to better playing the roles of precipitation and encapsulation, these high-melting-point auxiliaries form masterbatches together with the above low-melting-point auxiliaries, which will not affect subsequent applications of the masterbatches and even can play a better anti-aging role. Particularly, the use of functional auxiliaries, such as the antioxidant 168, the antioxidant 330 and the antioxidant 3114, not only can play a role in preventing the precipitation of the low-melting-point additive, but also has an anti-aging effect when used in the resin substrate. In addition, the high-melting-point additive can effectively solve the problem of clumping of the masterbatch when not added in a too high proportion.

The resin substrate in the present application can be adjusted according to a use environment of the additive masterbatch. For example, when the additive masterbatch needs to be added to a polypropylene resin system, polypropylene resin can be selected as the resin substrate. When the additive masterbatch needs to be added to a polyethylene resin system, polyethylene resin can be selected as the resin substrate. Preferably, the resin substrate is thermoplastic resin. On the one hand, the thermoplastic resin can be directly used as a component of a plastic product during subsequent processing (even if the component is different from components of the product, other impacts on the performance of the plastic product will not be caused because an addition mount of the additive masterbatch is usually small), and on the other hand, can also play a better first-layer barrier effect on the melted low-melting-point additive.

More preferably, the resin substrate is thermoplastic resin; and further preferably, the thermoplastic resin is selected from one or more of polyolefin, polyester, polyether, polyketone, polyamide, polyurethane, polystyrene, high-impact-resistant styrene, polyacrylate, polymethacrylate, polyacetal, polyacrylonitrile, polybutadiene, acrylonitrile-butadiene-phenyltriene trimers, styrene-acrylonitrile copolymers, acrylate-styrene-acrylonitrile trimers, cellulose acetate butyrate, cellulose polymers, polyimide, polyamideimide, polyetherimide, polyphenylene sulfide, polyphenyl ether, polysulfone, polyether sulfone, polyvinyl chloride, polycarbonate, polyformaldehyde, and ethylene-vinyl acetate polymers.

More preferably, the resin substrate is polyolefin. The polyolefin used as the resin substrate has higher universality, and can better improve the comprehensive performance of the masterbatch after cooperation with the high-melting-point additive. Further preferably, the polyolefin is selected from polypropylene and/or polyethylene.

In one preferred embodiment, according to parts by weight, the raw materials of the additive masterbatch include 30-70 parts of the resin substrate (for example, may be 30 parts, 32 parts, 35 parts, 40 parts, 42 parts, 44 parts, 45 parts, 46 parts, 48 parts, 50 parts, 52 parts, 55 parts, 58 parts, 60 parts, 65 parts, or 70 parts), 0.1-30 parts of the high-melting-point additive (for example, may be 0.1 part, 0.2 part, 0.5 part, 0.8 part, 1 part, 2 parts, 3 parts, 5 parts, 6 parts, 8 parts, 10 parts, 12 parts, 15 parts, 16 parts, 18 parts, 20 parts, 24 parts, 28 parts, or 30 parts), and 30-70 parts of the low-melting-point additive (for example, may be 30 parts, 32 parts, 35 parts, 40 parts, 42 parts, 44 parts, 45 parts, 46 parts, 48 parts, 50 parts, 52 parts, 55 parts, 58 parts, 60 parts, 65 parts, or 70 parts); and more preferably, according to parts by weight, the raw materials of the additive masterbatch include 30-70 parts of the resin substrate, 1-25 parts of the high-melting-point additive, and 30-70 parts of the low-melting-point additive. Further preferably, according to parts by weight, the raw materials of the polymer material additive masterbatch include 40-60 parts of the resin substrate, 1-20 parts of the high-melting-point additive, and 40-60 parts of the low-melting-point additive. Further preferably, a weight ratio of the high-melting-point additive to the low-melting-point additive is 1:3-15, most preferably 1:5-15. When the use amounts of various components are controlled within the above range, the addition amount of the low-melting-point additive can be increased as much as possible on the basis of effectively inhibiting the problems of clumping and the like.

In one preferred embodiment, the low-melting-point additive includes one or more of 2,2,6,6-tetramethyl-4-piperidinyl stearate, and a mixture of 2,2,6,6-tetramethyl-4-piperidinyl stearate and hexadecyl 3,5-bis-tert-butyl-4-hydroxybenzoate; the resin substrate includes polyethylene or polypropylene; and the high-melting-point additive includes one or more of tri[2,4-di-tert-butylphenyl]phosphite (antioxidant 168), 1,3,5-tri(3,5-di-tert-butyl-4-hydroxybenzyl)-1,3,5-triazin-2,4,6(1H,3H,5H)-trione (antioxidant 3114), 1,3,5-trimethyl-2,4,6-tri(3,5-di-tert-butyl-4-hydroxybenzyl)benzene (antioxidant 330), and polyethylene wax. By compounding the high-melting-point additive with the low-melting-point additive and the resin substrate according to the above method, the formed masterbatch has better performance in preventing adhesion and clumping, and the auxiliaries themselves have better anti-aging performance.

Exemplarily, the additive masterbatch includes:
1-20 parts of tri[2,4-di-tert-butylphenyl]phosphite, 30-50 parts of 2,2,6,6-tetramethyl-4-piperidinyl stearate, and 30-50 parts of polypropylene resin; or
1-20 parts of 1,3,5-tri(3,5-di-tert-butyl-4-hydroxybenzyl)-1,3,5-triazin-2,4,6(1H,3H,5H)-trione, 30-50 parts of 2,2,6,6-tetramethyl-4-piperidinyl stearate, and 30-50 parts of polypropylene resin; or
1-20 parts of 1,3,5-trimethyl-2,4,6-tri(3,5-di-tert-butyl-4-hydroxybenzyl)benzene, 30-50 parts of 2,2,6,6-tetramethyl-4-piperidinyl stearate, and 30-50 parts of polypropylene resin; or
0.1-10 parts of tri[2,4-di-tert-butylphenyl]phosphite, 0.1-10 parts of 1,3,5-trimethyl-2,4,6-tri(3,5-di-tert-butyl-4-hydroxybenzyl)benzene, 30-50 parts of 2,2,6,6-tetramethyl-4-piperidinyl stearate, and 30-50 parts of polypropylene resin; or
0.1-10 parts of tri[2,4-di-tert-butylphenyl]phosphite, 0.1-10 parts of 1,3,5-tri(3,5-di-tert-butyl-4-hydroxybenzyl)-1,3,5-triazin-2,4,6(1H,3H,5H)-trione, 30-50 parts of 2,2,6,6-tetramethyl-4-piperidinyl stearate, and 30-50 parts of polypropylene resin; or
0.1-10 parts of polyethylene wax, 0.1-10 parts of 1,3,5-tri(3,5-di-tert-butyl-4-hydroxybenzyl)-1,3,5-triazin-2,4,6(1H,3H,5H)-trione and/or tri[2,4-di-tert-butylphenyl]phosphite and/or 1,3,5-trimethyl-2,4,6-tri(3,5-di-tert-butyl-4-hydroxybenzyl)benzene, 30-50 parts of 2,2,6,6-tetramethyl-4-piperidinyl stearate, and 30-50 parts of polypropylene resin.

As described above, a granulation process of the masterbatch in the present application can adopt a conventional method in the art. For example, the additive masterbatch is formed by sequentially subjecting the raw materials to screw extrusion, granulation, drying, and cooling. The granulation is preferably performed by underwater pelletizing at an operating temperature of 190-230°C.

A particle size of the polymer material additive masterbatch of the present application can be adjusted according to needs, and the particle size is preferably 1-5 mm.

In addition, the present application also provides use of the additive masterbatch in a polymer material. Because the additive masterbatch has excellent anti-clumping performance, dispersion and compatibility of the masterbatch during processing of the polymer material are also facilitated. Specifically, a substrate of the polymer material includes, but is not limited to, polyolefin, polyvinyl chloride, polyacetal, polyamide, styrene polymers, polyurethane, ABS resin, etc. Specific polymer material products include, but are not limited to, plastic products, thermoplastic elastomer products, rubber products, coatings, adhesives, etc.

In short, the present application has a simple operating process, wide equipment applicability and stable production, and has the following advantages compared with others in product quality and appearance.
(1) The additive masterbatch of the present application utilizes the high-melting-point additive as a protective layer, and the prepared additive masterbatch is completely free of the phenomenon of clumping even in a storage and transportation environment at high temperature or alternating high temperature and low temperature.
(2) The additive masterbatch of the present application is simple in preparation process, easy to industrialize for mass production, and high in stability; and processing of downstream materials is not affected.
(3) A large-particle product and a small-particle product can be prepared in the present application, and after a fluidity level test in a beaker with a 500 G weight at 50°C for 24 h, the clumping fluidity of the additive masterbatch of the present application is at level 1-2, meeting diverse needs of processing of downstream materials.

The present application is further described in detail below in conjunction with specific embodiments, and these embodiments are not construed as limiting the scope of protection as claimed by the present application.

### Example 1

In the present example, an automatic measuring loss-in-weight scale was used. PP resin and an antioxidant 168 were added to a twin-screw extruder according to proportions in Table 1 below, UV-3853 liquid was added to the twin-screw extruder by using a liquid measuring pump, and after screw extrusion was performed (see Table 2 for an extrusion process), water cooling pelletizing, drying and cooling were performed to obtain a masterbatch with a particle size of 3.5-5 mm.

**Table 1**

| Antioxidant 168 | UV-3853 | PP resin |
|---|---|---|
| 6% | 50% | 44% |

**Table 2**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 200 | 210 | 210 | 210 | 210 | 210 | 200 | 200 | 200 | 210 | 210 | 210 |
| Correspondi ng parameters | Rotation speed of twin screws 19 rpm | | Current of twin screws 73 A | | Rotation speed of a melt pump 28 rpm | | Inlet pressure 0.72 mpa | | Outlet pressure 5.6 mpa | | Rotation speed of a melt pump 26 rpm | |

A fluidity level test was carried out on the masterbatch product in a beaker with a 500 G weight at 50°C for 24 h. Results are shown in the following table. Photos before and after the test are shown in Fig. 3, wherein (a) shows the photo before the test, and (b) shows the photo after the test.

### Example 2

Differences between the present example and Example 1 were as follows: proportions of components were shown in Table 3, a small-diameter die head was used during extrusion (see Table 4 for an extrusion process), and a particle size of a prepared masterbatch was 1.0-2.5 mm.

**Table 3**

| Antioxidant 168 | UV-3853 | PP resin |
|---|---|---|
| 4% | 50% | 46% |

**Table 4**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 205 | 215 | 215 | 215 | 215 | 215 | 205 | 205 | 205 | 210 | 210 | 210 |
| Correspondi ng parameters | Rotation speed of twin screws 12.3 rpm | | Current of twin screws 69 A | | Rotation speed of a melt pump 23.1 rpm | | Inlet pressure 0.79 mpa | | Outlet pressure 6.4 mpa | | Rotation speed of a melt pump 22.7 rpm | |

A fluidity level test was carried out on the masterbatch product in a beaker with a 500 G weight at 50°C for 24 h. Results are shown in the following table. Photos before and after the test are shown in Fig. 4, wherein (a) shows the photo before the test, and (b) shows the photo after the test.

### Example 3

Differences between the present example and Example 1 were as follows: proportions of components were shown in Table 5, an extrusion process was shown in Table 6, and a particle size of a prepared masterbatch was 3.5-5 mm.

**Table 5**

| Antioxidant 168 | UV-3853 | PP resin |
|---|---|---|
| 5% | 45% | 50% |

**Table 6**

| Temperatur | Stage | Stage | Stage | Stage | Stage | Stage | Stage | Stage | Stage | Stage | Stage | Head |
|---|---|---|---|---|---|---|---|---|---|---|---|---|
| e at various stages of an extruder (°C) | 1 | 2 | 3 | 4 | 5 | 6 | 7 | 8 | 9 | 10 | 11 | |
| | 205 | 215 | 215 | 215 | 215 | 215 | 205 | 205 | 205 | 210 | 210 | 210 |
| Correspondi ng parameters | Rotation speed of twin screws 19 rpm | | Current of twin screws 72 A | | Rotation speed of a melt pump 28 rpm | | Inlet pressure 0.56 mpa | | Outlet pressure 5.9 mpa | | Rotation speed of a melt pump 26 rpm | |

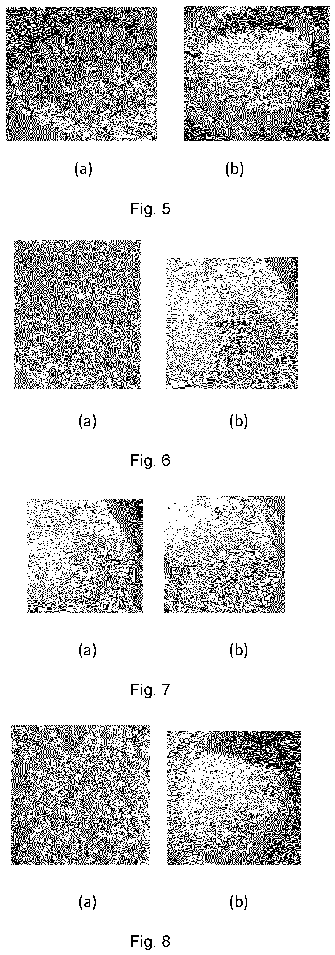

A fluidity level test was carried out on the masterbatch product in a beaker with a 500 G weight at 50°C for 24 h. Results are shown in the following table. Photos before and after the test are shown in Fig. 5, wherein (a) shows the photo before the test, and (b) shows the photo after the test.

### Example 4

Differences between the present example and Example 1 were as follows: proportions of components were shown in Table 7, an extrusion process was shown in Table 8, and a particle size of a prepared masterbatch was 3.5-5 mm.

**Table 7**

| Antioxidant 168 | UV-3853 | PP resin |
|---|---|---|
| 4% | 46% | 50% |

**Table 8**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 190 | 195 | 195 | 195 | 200 | 200 | 200 | 205 | 205 | 205 | 205 | 210 |
| Correspondi ng parameters | Rotation speed of twin screws 19.2 rpm | | Current of twin screws 71 A | | Rotation speed of a melt pump 29.3 rpm | | Inlet pressure 0.58 mpa | | Outlet pressure 5.9 mpa | | Rotation speed of a melt pump 27 rpm | |

A fluidity level test was carried out on the masterbatch product in a beaker with a 500 G weight at 50°C for 24 h. Results are shown in the following table. Photos before and after the test are shown in Fig. 6, wherein (a) shows the photo before the test, and (b) shows the photo after the test.

### Example 5

Differences between the present example and Example 1 were as follows: proportions of components were shown in Table 9, an extrusion process was shown in Table 10, and a particle size of a prepared masterbatch was 1.0-2.5 mm.

**Table 9**

| Antioxidant 3114 | UV-3853 | PP resin |
|---|---|---|
| 6% | 50% | 44% |

**Table 10**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 190 | 195 | 195 | 195 | 200 | 200 | 200 | 205 | 205 | 205 | 205 | 210 |
| Correspondi ng parameters | Rotation speed of twin screws 12.4 rpm | | Current of twin screws 73 A | | Rotation speed of a melt pump 23.3 rpm | | Inlet pressure 0.76 mpa | | Outlet pressure 6.8 mpa | | Rotation speed of a melt pump 23.4 rpm | |

A fluidity level test was carried out on the masterbatch product in a beaker with a 500 G weight at 50°C for 24 h. Results are shown in the following table. Photos before and after the test are shown in Fig. 7, wherein (a) shows the photo before the test, and (b) shows the photo after the test.

### Example 6

Differences between the present example and Example 1 were as follows: proportions of components were shown in Table 11, an extrusion process was shown in Table 12, and a particle size of a prepared masterbatch was 1.0-2.5 mm.

**Table 11**

| Antioxidant 330 | UV-3853 | PP resin |
|---|---|---|
| 8% | 50% | 42% |

**Table 12**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 210 | 220 | 220 | 220 | 220 | 210 | 210 | 210 | 210 | 220 | 220 | 220 |
| Correspondi ng parameters | Rotation speed of twin screws 12.1 rpm | | Current of twin screws 67 A | | Rotation speed of a melt pump | | Inlet pressure 0.73 mpa | | Outlet pressure 7.2 mpa | | Rotation speed of a melt pump | |
| | | | | | 23.5 rpm | | | | | | 23.3 rpm | |

A fluidity level test was carried out on the masterbatch product in a beaker with a 500 G weight at 50°C for 24 h. Results are shown in the following table. Photos before and after the test are shown in Fig. 8, wherein (a) shows the photo before the test, and (b) shows the photo after the test.

### Example 7

Differences between the present example and Example 1 were as follows: proportions of components were shown in Table 13, an extrusion process was shown in Table 14, and a particle size of a prepared masterbatch was 1.0-2.5 mm.

**Table 13**

| Antioxidant 3114 | Antioxidant 168 | UV-3853 | PP resin |
|---|---|---|---|
| 0.5% | 4.5% | 45% | 50% |

**Table 14**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 190 | 195 | 195 | 195 | 195 | 195 | 195 | 195 | 195 | 195 | 200 | 210 |
| Correspondi ng parameters | Rotation speed of twin screws 12.3 rpm | | Current of twin screws 68 A | | Rotation speed of a melt pump 23.5 rpm | | Inlet pressure 0.77 mpa | | Outlet pressure 7.1 mpa | | Rotation speed of a melt pump 23.4 rpm | |

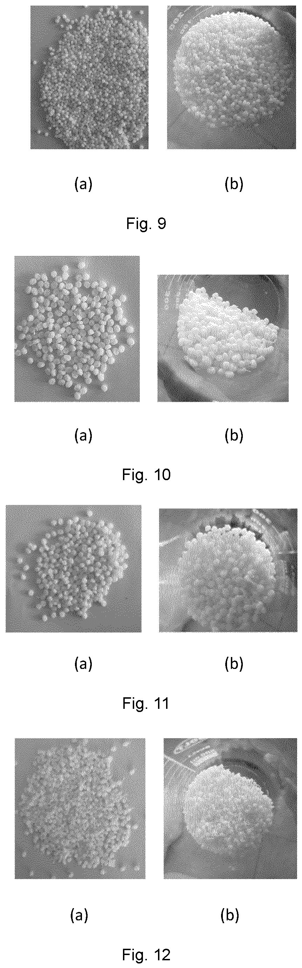

A fluidity level test was carried out on the masterbatch product in a beaker with a 500 G weight at 50°C for 24 h. Results are shown in the following table. Photos before and after the test are shown in Fig. 9, wherein (a) shows the photo before the test, and (b) shows the photo after the test.

### Example 8

Differences between the present example and Example 1 were as follows: proportions of components were shown in Table 15, an extrusion process was shown in Table 16, and a particle size of a prepared masterbatch was 3.5-5 mm.

**Table 15**

| Antioxidant 330 | Antioxidant 168 | UV-3853 | PP resin |
|---|---|---|---|
| 2% | 6% | 50% | 42% |

**Table 16**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 190 | 200 | 200 | 200 | 200 | 200 | 200 | 205 | 205 | 205 | 205 | 210 |
| Correspondi ng parameters | Rotation speed of twin screws 19.2 rpm | | Current of twin screws 71 A | | Rotation speed of a melt pump 28 rpm | | Inlet pressure 0.61 mpa | | Outlet pressure 5.5 mpa | | Rotation speed of a melt pump 26.4 rpm | |

A fluidity level test was carried out on the masterbatch product in a beaker with a 500 G weight at 50°C for 24 h. Results are shown in the following table. Photos before and after the test are shown in Fig. 10, wherein (a) shows the photo before the test, and (b) shows the photo after the test.

### Example 9

Differences between the present example and Example 1 were as follows: proportions of components were shown in Table 17, an extrusion process was shown in Table 18, and a particle size of a prepared masterbatch was 3.5-5 mm.

**Table 17**

| Antioxidant 3114 | Antioxidant 168 | UV-3853 | PP resin |
|---|---|---|---|
| 2% | 6% | 50% | 42% |

**Table 18**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 190 | 195 | 195 | 195 | 200 | 200 | 200 | 205 | 205 | 205 | 205 | 210 |
| Correspondi ng parameters | Rotation speed of twin screws 19.3 rpm | | Current of twin screws 72 A | | Rotation speed of a melt pump 28.3 rpm | | Inlet pressure 0.63 mpa | | Outlet pressure 5.9 mpa | | Rotation speed of a melt pump 26.6 rpm | |

A fluidity level test was carried out on the masterbatch product in a beaker with a 500 G weight at 50°C for 24 h. Results are shown in the following table. Photos before and after the test are shown in Fig. 11, wherein (a) shows the photo before the test, and (b) shows the photo after the test.

### Example 10

Differences between the present example and Example 1 were as follows: proportions of components were shown in Table 19, an extrusion process was shown in Table 20, and a particle size of a prepared masterbatch was 1.0-2.5 mm.

**Table 19**

| Antioxidant 330 | UV-3853 | PP resin |
|---|---|---|
| 8% | 50% | 42% |

**Table 20**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 210 | 210 | 215 | 215 | 215 | 215 | 215 | 215 | 220 | 220 | 220 | 220 |
| Correspondi ng parameters | Rotation speed of twin screws 12.6 rpm | | Current of twin screws 69 A | | Rotation speed of a melt pump 23.2 rpm | | Inlet pressure 0.79 mpa | | Outlet pressure 7.2 mpa | | Rotation speed of a melt pump 23.4 rpm | |

A fluidity level test was carried out on the masterbatch product in a beaker with a 500 G weight at 50°C for 24 h. Results are shown in the following table. Photos before and after the test are shown in Fig. 12, wherein (a) shows the photo before the test, and (b) shows the photo after the test.

### Example 11

Differences between the present example and Example 1 were as follows: proportions of components were shown in Table 21, an extrusion process was shown in Table 22, and a particle size of a prepared masterbatch was 1.0-2.5 mm.

**Table 21**

| Antioxidant 330 | UV-3853 | PP resin |
|---|---|---|
| 10% | 50% | 40% |

**Table 22**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 220 | 225 | 225 | 225 | 225 | 225 | 225 | 225 | 225 | 225 | 225 | 220 |
| Correspondi ng parameters | Rotation speed of twin screws 12.3 rpm | | Current of twin screws 72 A | | Rotation speed of a melt pump 23.8 rpm | | Inlet pressure 0.79 mpa | | Outlet pressure 7.4 mpa | | Rotation speed of a melt pump 23.4 rpm | |

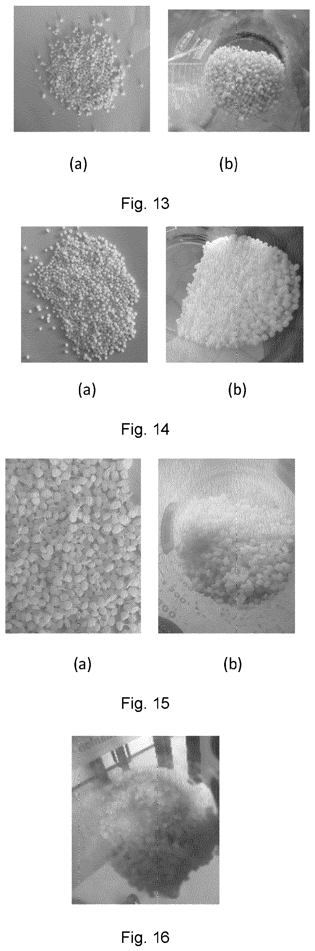

A fluidity level test was carried out on the masterbatch product in a beaker with a 500 G weight at 50°C for 24 h. Results are shown in the following table. Photos before and after the test are shown in Fig. 13, wherein (a) shows the photo before the test, and (b) shows the photo after the test.

### Example 12

Differences between the present example and Example 1 were as follows: proportions of components were shown in Table 23, an extrusion process was shown in Table 24, and a particle size of a prepared masterbatch was 1.0-2.5 mm.

**Table 23**

| Antioxidant 330 | Antioxidant 168 | UV-3853 | PP resin |
|---|---|---|---|
| 2% | 6% | 50% | 42% |

**Table 24**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 205 | 210 | 210 | 210 | 210 | 210 | 215 | 215 | 215 | 215 | 210 | 210 |
| Correspondi ng parameters | Rotation speed of twin screws 12.2 rpm | | Current of twin screws 71 A | | Rotation speed of a melt pump 23.6 rpm | | Inlet pressure 0.76 mpa | | Outlet pressure 7.1 mpa | | Rotation speed of a melt pump 23.4 rpm | |

A fluidity level test was carried out on the masterbatch product in a beaker with a 500 G weight at 50°C for 24 h. Results are shown in the following table. Photos before and after the test are shown in Fig. 14, wherein (a) shows the photo before the test, and (b) shows the photo after the test.

### Example 13

Differences between the present example and Example 1 were as follows: proportions of components were shown in Table 25, an extrusion process was shown in Table 26, and a particle size of a prepared masterbatch was 1.0-2.5 mm.

**Table 25**

| Polyethylene wax | Antioxidant 168 | UV-3853 | PP resin |
|---|---|---|---|
| 4% | 6% | 50% | 40% |

**Table 26**

| Temperatur e at various stages of an extruder (°C) | Stage 1 | Stage 2 | Stage 3 | Stage 4 | Stage 5 | Stage 6 | Stage 7 | Stage 8 | Stage 9 | Stage 10 | Stage 11 | Head |
|---|---|---|---|---|---|---|---|---|---|---|---|---|
| | 190 | 195 | 195 | 195 | 195 | 195 | 195 | 195 | 195 | 195 | 195 | 200 |
| Correspondi ng parameters | Rotation speed of twin screws 12.4 rpm | | Current of twin screws 65A | | Rotation speed of a melt pump 23.8 rpm | | Inlet pressure 0.63 mpa | | Outlet pressure 6.8 mpa | | Rotation speed of a melt pump 23.4 rpm | |

A fluidity level test was carried out on the masterbatch product in a beaker with a 500 G weight at 50°C for 24 h. Results are shown in the following table. Photos before and after the test are shown in Fig. 15, wherein (a) shows the photo before the test, and (b) shows the photo after the test.

### Comparative Example 1

A PP masterbatch product 1 of commercially available UV-3853 (weight content of UV-3853: 50%) was selected, and a fluidity level test was carried out on the masterbatch product in a beaker with a 500 G weight at 50°C for 24 h. A photo is shown in Fig. 16.

The above product is obtained by forming a layer of a protective cover on a surface of a common masterbatch product using a co-extrusion technology. However, a cutting surface of a cutter is not protected by the protective cover during pelletizing, and the product has a dark and light yellow color and still has the phenomenon of clumping.

### Comparative Example 2

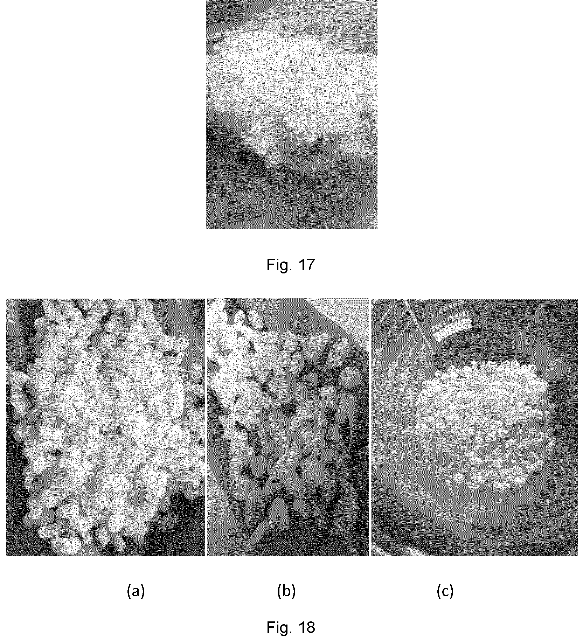

A PP masterbatch product 2 of commercially available UV-3853 (weight content of UV-3853: 50%) was selected, the fluidity of the product prepared by foaming was at level 4, and a fluidity level test was carried out on the masterbatch product in a beaker with a 500 G weight at 50°C for 24 h. A photo is shown in Fig. 17. The product has serious clumping.

### Comparative Example 3

A product prepared by a method in CN113462079A (weight content of UV-3853: 50%) was selected. It is found during production that due to sparse materials, the pressure of a melt is small, a pressure difference is difficult to form in granulation, it can only be ensured that particles are relatively normal in the first 5 minutes, and then flaky particles and serious tailing will appear. Moreover, due to sparse materials, venting and blocking of a die head are likely to be caused, leading to a low material utilization rate and a low product yield. Photos of a product at the beginning of production, a product after production for 5 minutes and an untested product are shown in Fig. 18, wherein Fig. (a) shows the photo of the product at the beginning of production, Fig. (b) shows the photo of the product after production for 5 minutes, and Fig. (c) shows the photo of the untested product, as shown in Fig. 18.

Although the product produced by the formula has no clumping, because the fluidity of materials is close to the state of pure wax after melting, an extremely low content of resin leads to the masterbatch having no strength and having serious tailing, poor regularity and small density, and the masterbatch is difficult to process and poor in machine adaptability and has great difficulty in batch and stable production. In addition, the masterbatch has the risks of too low strength and product cracking during processing and use. Due to these material characteristics, a small-particle product cannot be produced by the process.

The above masterbatches prepared in examples and comparative examples were observed in appearance, and the yield (qualified product quantity/feeding quantity) was calculated. Results are shown in Table 27.

A fluidity level test was carried out on the masterbatch products in various examples and comparative examples in a beaker with a 500 G weight at 50°C for 24 h. Specific operations are as follows:
1, placing 50 grams of the masterbatches in a beaker, placing a jar (round stainless steel sheet) on top of the powders or pellets, then put a 500-gram weight on top of the jar;
2, placing the beaker in a forced air oven at 50°C for 24 hours (a fresh sample was used for each temperature exposure);
3, removing and cooling to room temperature for two hours; and
4, rating the clumping, blocking, friability and flow properties of the sample using the following rating system:
   level 1-free flowing;
   level 2-some lumps, break apart easily (friable);
   level 3-mostly lumps, break apart with some efforts (somewhat friable);
   level 4-mostly lumps, does not break apart;
   level 5-fused solid.
   Results are as shown in Table 27 below:

**Table 27**

| Example number | Appearance | Yield | Fluidity level test for 24 H | |
|---|---|---|---|---|
| | | | Appearance | Fluidity level |
| Example 1 | Large milky white particles, 3.5-5 mm, which are regular and spherical-like particles without tailing | 100% | No clumping | Fluidity level 1 |
| Example 2 | Small milky white particles, 1.0-2.5 mm, which are regular and spherical-like particles without tailing | 99% | No clumping | Fluidity level 1-2 |
| Example 3 | Large milky white particles, 3.5-5 mm, which are regular and spherical-like particles without tailing | 100% | No clumping | Fluidity level 1 |
| Example 4 | Large milky white particles, 3.5-5 mm, which are regular and spherical-like particles without tailing | 100% | No clumping | Fluidity level 1 |
| Example 5 | Small milky white particles, 1.0-2.5 mm, which are regular and spherical-like particles without tailing | 100% | No clumping | Fluidity level 1 |
| Example 6 | Small milky white particles, 1.0-2.5 mm, which are regular and spherical-like particles without tailing | 100% | No clumping | Fluidity level 1 |
| Example 7 | Small milky white particles, 1.0-2.5 mm, which are regular and spherical-like particles without tailing | 99% | No clumping | Fluidity level 1 |
| Example 8 | Large milky white particles, 3.5-5 mm, which are regular and spherical-like particles without tailing | 100% | No clumping | Fluidity level 1 |
| Example 9 | Large milky white particles, 3.5-5 mm, which are regular and spherical-like particles without tailing | 100% | No clumping | Fluidity level 1 |
| Example 10 | Small milky white particles, 1.0-2.5 mm, which are regular and spherical-like particles without tailing | 100% | No clumping | Fluidity level 1-2 |
| Example 11 | Small milky white particles, 1.0-2.5 mm, which are regular and spherical-like particles without tailing | 100% | No clumping | Fluidity level 1 |
| Example 12 | Small milky white particles, 1.0-2.5 mm, which are regular and spherical-like particles without tailing | 99% | No clumping | Fluidity level 1 |
| Example 13 | Small milky white particles, 1.0-2.5 mm, which are regular and spherical-like particles with slight tailing | 98% | No clumping | Fluidity level 1-2 |
| Comparative Example 1 | Light yellow particles | / | A thick clumping layer at the bottom | Fluidity level 3 |
| Comparative Example 2 | Large milky white particles | / | Complete clumping | Fluidity level 4 |
| Comparative Example 3 | Large milky white particles, which are irregular and cylindrical or flaky particles with serious tailing | 25% | No clumping | Fluidity level 1 |

As can be seen from the above results, the low-melting-point additive masterbatch prepared in the present application has a good anti-clumping effect, and any adhesion and clumping phenomena are not observed when the additive masterbatch is placed in a forced air convection oven for baking at 50°C for 24 hours.

Moreover, the additive masterbatch of the present application has a simple production method, a stable process, a high yield, a wide equipment application range and a low cost without any use risk for back-end customers, and has extremely high market competitiveness in domestic and foreign markets.

The descriptions above are only preferred embodiments of the present application and are not intended to limit the present application. For those skilled in the art, various alterations and changes of the present application can be made. Any modifications, equivalent substitutions, improvements and the like that are made within the spirit and principles of the present application shall be included in the scope of protection of the present application.

## Claims

1. An additive masterbatch, wherein raw materials of the additive masterbatch comprise a resin substrate, a high-melting-point additive, and a low-melting-point additive, wherein a melting point of the high-melting-point additive is greater than 40°C, and a melting point of the low-melting-point additive is equal to or less than 40°C.

2. The additive masterbatch according to claim 1, wherein the low-melting-point additive is a liquid or paste at room temperature, or a solid with the melting point of equal to or less than 40°C; and preferably, the melting point of the high-melting-point additive is greater than 80°C, more preferably greater than 100°C, further preferably greater than 150°C, and further preferably greater than 200°C.

3. The additive masterbatch according to claim 1 or 2, wherein the low-melting-point additive is a weather-resistance additive with the melting point of equal to or less than 40°C, preferably a light stabilizer with the melting point of equal to or less than 40°C; and
preferably, the light stabilizer comprises a hindered amine light stabilizer and/or an ultraviolet absorber, more preferably the hindered amine light stabilizer or a composition thereof.

4. The additive masterbatch according to claim 3, wherein the hindered amine light stabilizer or a composition thereof is selected from one or more of a reaction product of bis(2,2,6,6-tetramethyl-4-piperidyl) sebacate with tert-butyl hydroperoxide and octane, 2,2,6,6-tetramethyl-4-piperidinyl stearate, a mixture of bis(1,2,2,6,6-pentamethyl-4-piperidyl) sebacate and mono(1,2,2,6,6-pentamethyl-4-piperidyl) sebacate, bis(2,2,6,6-tetramethyl-1-undecanoxy-4-yl)-carbonate, and a mixture of 2,2,6,6-tetramethyl-4-piperidinyl stearate and hexadecyl 3,5-bis-tert-butyl-4-hydroxybenzoate.

5. The additive masterbatch according to claim 3, wherein the ultraviolet absorber is selected from one or more of benzotriazole ultraviolet absorbers, cyanoacrylate ultraviolet absorbers, benzamidine ultraviolet absorbers, benzophenone ultraviolet absorbers, hydroxyphenyltriazine ultraviolet absorbers, oxanilide ultraviolet absorbers, or salicylate ultraviolet absorbers; and more preferably, the ultraviolet absorbent is selected from one or more of a reaction product of methyl 3-(3-(2H-benzotriazol-2-yl)-5-tert-butyl-4-hydroxyphenyl)propionate and PEG 300, hexadecyl 3,5-di-tert-butyl-4-hydroxybenzoate, 2'-ethylhexyl 2-cyano-3,3-diphenylacrylate, and N-(ethoxycarbonylphenyl)-N'-methyl-N'-phenylformamidine.

6. The additive masterbatch according to any one of claims 1 to 4, wherein the high-melting-point additive comprises an organic compound and/or an inorganic compound, and the high-melting-point additive is preferably a polymer material additive; more preferably, the high-melting-point additive is a polymer material organic additive with a relative molecular mass of greater than 500, further preferably a polymer material organic additive with a relative molecular mass of greater than 600; further preferably, the high-melting-point additive is selected from one or more of tri[2,4-di-tert-butylphenyl]phosphite, 1,3,5-tri(3,5-di-tert-butyl-4-hydroxybenzyl)-1,3,5-triazin-2,4,6(1H,3H,5H)-trione, 1,3,5-trimethyl-2,4,6-tri(3,5-di-tert-butyl-4-hydroxybenzyl)benzene, and polyethylene wax;
preferably, the resin substrate is thermoplastic resin; more preferably, the thermoplastic resin is selected from one or more of polyolefin, polyester, polyether, polyketone, polyamide, polyurethane, polystyrene, high-impact-resistant styrene, polyacrylate, polymethacrylate, polyacetal, polyacrylonitrile, polybutadiene, acrylonitrile-butadiene-phenyltriene trimers, styrene-acrylonitrile copolymers, acrylate-styrene-acrylonitrile trimers, cellulose acetate butyrate, cellulose polymers, polyimide, polyamideimide, polyetherimide, polyphenylene sulfide, polyphenyl ether, polysulfone, polyether sulfone, polyvinyl chloride, polycarbonate, polyformaldehyde, and ethylene-vinyl acetate polymers;
more preferably, the resin substrate is the polyolefin; and further preferably, the polyolefin is selected from polypropylene and/or polyethylene.

7. The additive masterbatch according to any one of claims 1 to 6, wherein according to parts by weight, the raw materials of the additive masterbatch comprise 30-70 parts of the resin substrate, 0.1-30 parts of the high-melting-point additive, and 30-70 parts of the low-melting-point additive;
more preferably, according to parts by weight, the raw materials of the additive masterbatch comprise 30-70 parts of the resin substrate, 1-25 parts of the high-melting-point additive, and 30-70 parts of the low-melting-point additive;
further preferably, according to parts by weight, the raw materials of the additive masterbatch comprise 40-60 parts of the resin substrate, 1-20 parts of the high-melting-point additive, and 40-60 parts of the low-melting-point additive; and
further preferably, a weight ratio of the high-melting-point additive to the low-melting-point additive is 1:3-15, most preferably 1:5-15.

8. The additive masterbatch according to any one of claims 1 to 7, wherein the low-melting-point additive comprises one or more of 2,2,6,6-tetramethyl-4-piperidinyl stearate, and a mixture of 2,2,6,6-tetramethyl-4-piperidinyl stearate and hexadecyl 3,5-bis-tert-butyl-4-hydroxybenzoate; the resin substrate comprises polyethylene or polypropylene; the high-melting-point additive comprises one or more of tri[2,4-di-tert-butylphenyl]phosphite, 1,3,5-tri(3,5-di-tert-butyl-4-hydroxybenzyl)-1,3,5-triazin-2,4,6(1H,3H,5H)-trione, 1,3,5-trimethyl-2,4,6-tri(3,5-di-tert-butyl-4-hydroxybenzyl)benzene, and polyethylene wax; and
preferably, the additive masterbatch comprises:
1-20 parts of tri[2,4-di-tert-butylphenyl]phosphite, 30-50 parts of 2,2,6,6-tetramethyl-4-piperidinyl stearate, and 30-50 parts of polypropylene resin; or
1-20 parts of 1,3,5-tri(3,5-di-tert-butyl-4-hydroxybenzyl)-1,3,5-triazin-2,4,6(1H,3H,5H)-trione, 30-50 parts of 2,2,6,6-tetramethyl-4-piperidinyl stearate, and 30-50 parts of polypropylene resin; or
1-20 parts of 1,3,5-trimethyl-2,4,6-tri(3,5-di-tert-butyl-4-hydroxybenzyl)benzene, 30-50 parts of 2,2,6,6-tetramethyl-4-piperidinyl stearate, and 30-50 parts of polypropylene resin; or
0.1-10 parts of tri[2,4-di-tert-butylphenyl]phosphite, 0.1-10 parts of 1,3,5-trimethyl-2,4,6-tri(3,5-di-tert-butyl-4-hydroxybenzyl)benzene, 30-50 parts of 2,2,6,6-tetramethyl-4-piperidinyl stearate, and 30-50 parts of polypropylene resin; or
0.1-10 parts of tri[2,4-di-tert-butylphenyl]phosphite, 0.1-10 parts of 1,3,5-tri(3,5-di-tert-butyl-4-hydroxybenzyl)-1,3,5-triazin-2,4,6(1H,3H,5H)-trione, 30-50 parts of 2,2,6,6-tetramethyl-4-piperidinyl stearate, and 30-50 parts of polypropylene resin; or
0.1-10 parts of polyethylene wax, 0.1-10 parts of 1,3,5-tri(3,5-di-tert-butyl-4-hydroxybenzyl)-1,3,5-triazin-2,4,6(1H,3H,5H)-trione and/or tri[2,4-di-tert-butylphenyl]phosphite and/or 1,3,5-trimethyl-2,4,6-tri(3,5-di-tert-butyl-4-hydroxybenzyl)benzene, 30-50 parts of 2,2,6,6-tetramethyl-4-piperidinyl stearate, and 30-50 parts of polypropylene resin.

9. The additive masterbatch according to any one of claims 1 to 9, wherein the additive masterbatch is formed by sequentially subjecting the raw materials to screw extrusion, granulation, drying, and cooling, and the granulation is preferably performed by underwater pelletizing at an operating temperature of 190-230°C; and preferably, a particle size of the polymer material additive masterbatch is 1-5 mm.

10. Use of the additive masterbatch according to any one of claims 1 to 9 in a polymer material.
